# EUROPÄISCHE PATENTANMELDUNG

(11) **EP 2 447 506 A2**
(43) Veröffentlichungstag der Anmeldung: **02.05.2012**
(21) Anmeldenummer: 11184160.7
(22) Anmeldetag: 06.10.2011
(51) Int. Cl.: F02C 6/18

(54) **System zur Erzeugung mechanischer und/oder elektrischer Energie**

(30) Priorität: 22.10.2010 DE 102010042792
(71) Anmelder: MAN Diesel & Turbo SE, 86153 Augsburg (DE)
(72) Erfinder: Gericke, Bernd, 51067 Köln (DE); Beukenberg, Markus, 45481 Mülheim (DE)

(57) **Zusammenfassung**

System zur Erzeugung mechanischer und/oder elektrischer Energie, bestehend aus einem mit einer Gasturbinenanlage gekoppelten weiteren Aggregatskette sowie mindestens einem mechanische Energie verbrauchenden Verdichter und/oder mindestens einem elektrische Energie erzeugenden Generator, wobei die Gasturbinenanlage aus einem Verdichterteil zum Verdichten von Luft, einer Brennkammer zur Verbrennung eines Brennstoffs zusammen mit der verdichteten Luft des Verdichterteils zu energiereichem Heißgas, einem Turbinenteil zum Expandieren des Heißgases sowie zur anschließenden Gewinnung mechanischer Energie für den Verdichter und/oder Generator besteht, wobei die weitere Aggregatskette ein geschlossener Kreislauf mit einem Arbeitsfluid ist und aus mindestens einem Wärmetauscher zur Erhöhung der Wärmeenergie des Arbeitsfluids, mindestens einem Expander zum Expandieren des Arbeitsfluids sowie zur anschließenden Gewinnung mechanischer Energie für den Verdichter und/oder Generator, mindestens einem Kondensator zum Kondensieren des entspannten Arbeitsmittels und mindestens einer Pumpe zum Fördern des Arbeitsfluids besteht **dadurch gekennzeichnet**, dass die Koppelung der Gasturbinenanlage mit der weiteren Aggregatskette mittels des über die Verdichterluft des Verdichters mit Wärme gespeisten Wärmetauschers erfolgt und den geschlossenen Kreislauf durch das Arbeitsfluid in Gang setzt.

## Beschreibung

Die Erfindung betrifft ein System zur Erhöhung der Wirkungsgrade bei der Erzeugung von mechanischer und/oder elektrischer Energie in einer Gasturbinenanlage, einerseits durch eine optimierte Nutzung der in einer Gasturbinenanlage anfallenden Wärme durch Einkopplung zusätzlicher Arbeit leistender Fluid-Kreisläufe und andererseits durch Einkopplung solarer Energie in die Gasturbinenanlage.

Das Grundprinzip einer herkömmlichen Gasturbinenanlage besteht darin, dass Frischluft in einem Luftverdichter verdichtet wird und dann in einer Brennkammer unter Zuführung eines Brennstoffs zu einem energiereicheren Heißgas verbrannt sowie anschließend im Turbinenteil der Gasturbinenanlage Arbeit leistend entspannt wird, wobei ein Teil der gewonnenen Energie zum Antrieb des Luftverdichters verbraucht wird und der Rest in elektrische Nutzenergie umgewandelt werden kann. Die Umwandlung in elektrische Nutzenergie erfolgt über einen mit dem Turbinenteil der Gasturbinenanlage verbundenen Generator zur Umwandlung der mechanischen in elektrische Energie, dabei wird der Turbinenteil mit dem in der Brennkammer erzeugten heißen sowie unter hohem Druck stehenden Heißgas gespeist und anschließend wird dieses noch immer heiße Heißgas in vielen praktischen Anwendungen, wie beispielsweise in Pipeline- Verdichterstationen, über den Abgaskamin der Gasturbinenanlage nutzlos an die Umwelt abgegeben.

Ausgehend vom steigenden Energiebedarf und dem Ziel den CO₂ Ausstoß deutlich zu reduzieren, ist es erforderlich die Wirkungsgrade von Anlagen zur Erzeugung mechanischer und/oder elektrischer Energie zu erhöhen.

Im Stand der Technik sind zur Erhöhung der Gesamtwirkungsgrade seit vielen Jahren die aus Gas- und Dampfturbinen bestehenden Kombianlagen bekannt, worin die vorteilhaften Eigenschaften der Gasturbinen- mit denen der Dampfturbinenanlagen verbunden werden. Ebenfalls sind seit einigen Jahren sowohl Gas- als auch bei Dampfturbinenanlagen mit eingekoppelter Sonnenenergie bekannt, wobei hier je nach Auslegung der Anlagen sehr unterschiedliche Parameter der Arbeitsmedien sowie der damit verbundenen Belastungen der jeweiligen Anlagenbauteile zu berücksichtigen sind und dadurch der jeweilige Einsatz der solaren Einkopplung der Sonnenenergie zu aufwändigen und damit zu kostspieligen Konzepten führen kann.

Die bisher im industriellen Großmaßstab gebauten Solar-Kraftwerke basieren auf der sogenannten Parabolrinnen-Technologie, dabei wird über Thermalölkreisläufe die solare Energie in den konventionellen Dampf-Kraft-Prozess eingekoppelt, doch können aufgrund der relativ niedrigen oberen Prozesstemperatur nur relativ geringe Prozesswirkungsgrade erzielt werden.

Durch die Bündelung der Solar-Energie über Heliostaten in einem Solar-Tower kann die obere Prozesstemperatur deutlich (ca. 950°C) angehoben werden, dadurch sind bei kombinierten Gas- und Dampfturbinen höhere Prozesswirkungsgrade als bei der Parabolspiegel-Technologie zu erzielen, hierbei jedoch sind die zu investierenden Kosten sehr groß und zudem lassen es die Standorte in Gebieten mit großem Wassermangel sowie mit hoher Sonneneinstrahlung als notwendig erscheinen andere Systeme zu entwickeln.

Bei den vorgenannten Kombianlagen können höhere Wirkungsgrade nur über hohe Abgastemperaturen der Gasturbinenanlagen erreicht werden, wobei dies aus Gründen der Thermodynamik eine hohe Eintrittstemperatur in den Turbinenteil der Gasturbinenanlage sowie ein korrespondierendes optimales Druckverhältnis der im Verdichterteil der Gasturbinenanlage erzeugten verdichteten Verbrennungsluft erfordert. Die daraus dann zwangsweise resultierenden hohen Wärmebelastungen der Beschaufelungen im Turbinenteil der Gasturbinenanlage erfordern dann entsprechend hohe Kühlluftmengen, die in der Regel nach dem Luftverdichter entnommen werden und daher zu einer nicht unwesentlichen Reduzierung des Gesamtwirkungsgrades führen.

Während die Eintrittstemperaturen der Gasturbinenanlage einen maßgeblichen Einfluss auf die Höhe der elektrischen Leistung der Gasturbinenanlage haben, bestimmt der Druck (bzw. das Druckverhältnis der Gasturbinenanlage) am Austritt des Verdichterteils der Gasturbinenanlage den Wirkungsgrad.

Der Erfindung liegt demnach die Aufgabe zugrunde ein System für eine spürbar effizientere Gesamtanlage zur Erzielung einer höheren Arbeitsleistung zur Erzeugung mechanischer und/oder elektrischer Energie zu schaffen und gleichzeitig die vorgenannten Nachteile zu verringern.

Gelöst wird die Aufgabe mit einem System zur Erzeugung mechanischer und/oder elektrischer Energie durch Bereitstellung zusätzlicher mechanischer Leistung über einen geschlossenen Arbeitsfluid-Kreislauf in Kopplung mit einer Gasturbinenanlage nach dem Oberbegriff des Anspruchs 1 und durch die kennzeichnenden Merkmale des Anspruchs 1 weitergebildet, die Unteransprüche betreffen vorteilhafte Weiterbildungen.

Das erfindungsgemäße Gesamtsystem basiert auf einer Gasturbinenanlage mit niedriger Abgastemperatur, somit auch niedrigerer Eintrittstemperatur in den Turbinenteil sowie durch den Verdichterteil erzeugte hoch temperierte Verbrennungsluft (hoher Druck am Austritt des Verdichterteils der Gasturbinenanlage) für die Brennkammer, so dass insbesondere die hohen Wärmebelastungen an den Beschaufelungen im Turbinenteil deutlich vermindert werden sowie entsprechend weniger Kühlluftmengen aus dem Verdichterteil entnommen werden müssen und dadurch der Wirkungsgrad der Gasturbinenanlage verbessert wird. Die mit niedriger Abgastemperatur betriebene Gasturbinenanlage eignet sich jetzt einerseits besonders gut zur Einkopplung eines niedrig siedenden Arbeit leistenden Arbeitsfluid-Kreislaufs und andererseits optional zur zusätzlichen Einkopplung solarer Energie, wodurch der Bedarf an zusätzlicher fossiler Energie zum optimalen Betrieb der Gasturbinenanlage sehr gering gehalten werden kann. Im Idealfall kann ganz auf die zusätzliche fossile Energie verzichtet werden.

Das erfindungsgemäße Gesamtsystem besteht somit zunächst aus einem mit einer Gasturbinenanlage gekoppelten Arbeitsfluid-Kreislauf, so dass zusätzliche mechanische Leistung zur weiteren Erhöhung des Wirkungsgrades erzielt werden kann.

Ein geschlossener Arbeitsfluid-Kreislauf besteht aus einem Abwärme-Wärmetauscher zur Erwärmung eines Arbeitsfluids, einer Arbeitsfluidpumpe, einer Bypassarmatur für einen Expander, einem Expander zum Expandieren des Arbeitsfluids sowie zur Gewinnung mechanischer Energie und einen Kondensator zum Kondensieren des entspannten Arbeitsfluids.

Die Kopplung des geschlossenen Arbeitsfluids-Kreislaufes mit dem Verdichterteil der Gasturbine erfolgt über einen Wärmetauscher, so dass die Verdichterluftwärme eine Erhöhung der Temperatur sowie des Druckes des Arbeitsfluids bewirkt und das System in Gang setzt.

Wesentlicher Aspekt der Erfindung ist es, dass die Kopplung des geschlossenen Arbeitsfluid-Kreislaufs auch bei relativ geringen Temperaturen der Verdichterluftwärme erfolgen kann, möglich ist dies durch die niedrige Siedetemperatur des Arbeitsfluids des eingekoppelten geschlossenen Kreislaufs. Somit werden die vorgenannten Nachteile von hohen Eintrittstemperaturen bei Gasturbinenanlagen vermieden, so dass die nötigen Kühlluftmengen für die Beschaufelung im Turbinenteil der Gasturbinenanlage erheblich reduziert werden. Die sonst üblichen Entnahmestellen für die Kühlluftmengen am Austritt des Verdichterteils der Gasturbinenanlage können bei Umsetzung der erfindungsgemäßen Anordnung auch nach Einkopplung des Arbeitsfluid-Kreislaufs erfolgen (nach dem später noch beschriebenen Wärmetauscher), so dass die Kühlluftmengen durch die dann bereits weiter reduzierte Temperatur der Luft des Verdichters noch weiter reduziert werden können.

Die Verdichterluftwärme dient, im Rahmen der an sich bekannten Gasturbinenanlage, der Versorgung der Gasturbinenbrennkammer mit erwärmter sowie druckerhöhter Luft, so dass, nach deren Abkühlung im mit dem geschlossenen Arbeitsfluid-Kreislauf gekoppelten Wärmetauscher, wieder eine Erwärmung durch einen mit der Gasturbinenabwärme gespeisten Wärmetauscher erfolgt.

Liegt die Temperatur der Gasturbinenabwärme hinter dem vorgenannten Wärmetauscher aus Auslegungsgründen zu hoch, so kann durch Kopplung mit einem zusätzlichen geschlossenen Niederdruck **(ND)-Kreislauf** die Temperatur des in einen Schornstein abgegebenen Abgases gesenkt werden und es kann dieser ND-Kreisauf mit dem bereits beschriebenen Arbeitsfluid-Kreislauf, Hochdruck (HD)-Kreislauf, kombiniert werden.

Somit ergibt sich einerseits ein durch die Abwärmeseite des Gasturbinen-Kompressorteils in Gang gebrachter HD-Kreislauf, dessen Arbeitsfluid zunächst einen HD-Expander sowie nachgeschaltet einen ND-Expander speist und andererseits ergibt sich ein durch die Abwärme des Gasturbinen-Turbinenteils in Gang gebrachter ND-Arbeitsfluid-Kreislauf, dessen Arbeitsfluid jedoch ausschließlich den ND-Expander speist.

Neben der Kopplung der Gasturbinenanlage mit einem Arbeitsfluid-Kreislauf, ist die erfindungsgemäße Vorrichtung nach einem weiteren Aspekt der Erfindung zusätzlich noch mit einer Solarheizvorrichtung gekoppelt, diese sind miteinander kombiniert und stellen eine Weiterentwicklung des wirkungsgradoptimierten Gesamtsystems dar.

Die mit der Solarheizvorrichtung gekoppelte Gasturbinenanlage weist einen Verdichterteil zum Verdichten eines Gases sowie einen Turbinenteil zur Umsetzung von Entropie der Verdichterluft in mechanische Leistung auf. Zwischen dem Verdichterteil und dem Turbinenteil der Gasturbinenanlage ist eine solare Heizvorrichtung, die in der Regel eine oder mehrere Solarheizer zur Erwärmung der Verdichterluft umfasst, angeordnet.

Bei ungünstigen Bedingungen, insbesondere bei bedecktem Himmel oder in der Nacht, kann das Gas durch die Solarheizvorrichtung nur in begrenztem Maße erwärmt werden. Um diesen Energieverlust zu vermeiden, sind Regelvorrichtungen vorgesehen und die Solarheizvorrichtung kann wahlweise ganz oder teilweise bypassiert werden, somit wird auch ermöglicht, dass das Gas, ohne die Solarheizvorrichtung zu durchströmen, von dem Verdichterteil über eine fossil befeuerte Brennkammer zum Turbinenteil geleitet wird (Hybridisierung).

Ein Ausführungsbeispiel der Erfindung wird anhand der Zeichnungen erläutert.

Es zeigt:
- Fig. 1:: Schematisches erstes Ausführungsbeispiel eines erfindungsgemäßen Systems zur Erzeugung mechanischer und/oder elektrischer Energie.
- Fig. 2:: Schematisches zweites Ausführungsbeispiel einer erfindungsgemäßen Systems zur Erzeugung mechanischer und/oder elektrischer Energie.

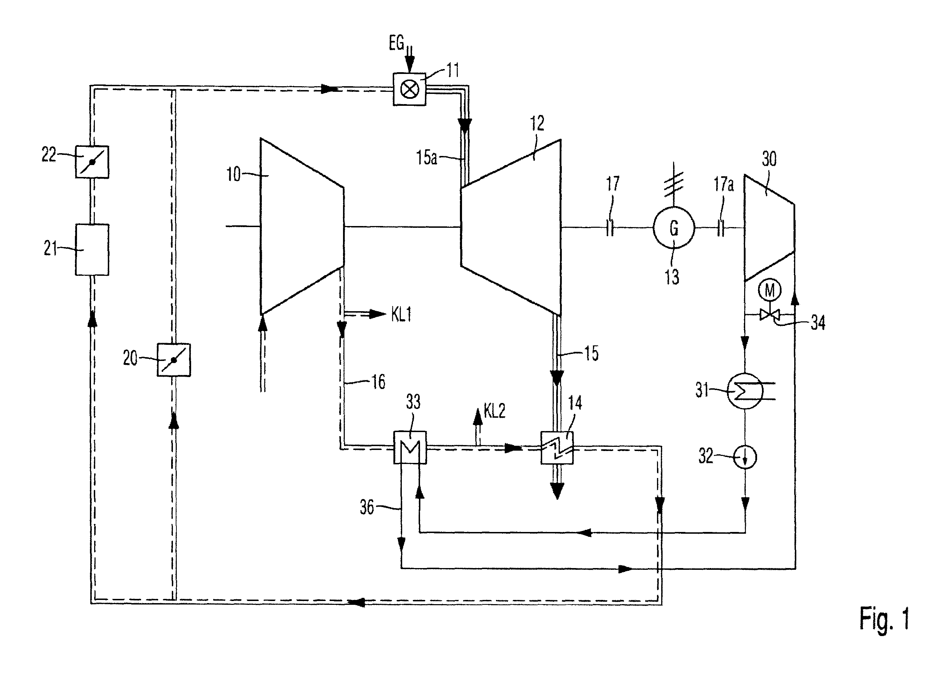

Ein System zur Erzeugung mechanischer und/oder elektrischer Energie gemäß einem ersten Ausführungsbeispiel der vorliegenden Erfindung wird unter Bezugnahme auf die beigefügte Figur 1 beschrieben.

Bei dem Ausführungsbeispiel der vorliegenden Erfindung nach Figur 1 wird die grundsätzliche erfindungsgemäße Anordnung des mit der Gasturbinenanlage (10, 11, 12, 15, 16, 17, 20, 21, 22) gekoppelten Arbeisfluid-Kreislaufs (30, 31, 32, 33, 34, 36) zur Gewinnung von mechanischer Energie zur Erzeugung von elektrischer Energie durch einen Generator (13) dargerstellt.

Die Gasturbinenanlage beinhaltet grundsätzlich einen Verdichterteil (10), einen Brennerteil (11) sowie einen Turbinenteil (12), optional kann über Regelvorrichtungen (20, 22) eine Solarheizvorrichtung (21) zur Wirkungsgradoptimierung der Gasturbinenanlage eingekoppelt werden.

Der Arbeitsfluid-Kreislauf enthält als Arbeitsmittel (36) beispielsweise NH₃ (Ammioniak), einen Expander (30), eine Bypassvorrichtung (34) für die Umgehung des Expanders (30), einen Kondensator (31), eine Pumpe (32) für den Arbeitsfluid-Kreislauf und einen Wärmetauscher (33).

Die Erzeugung elektrischer Energie durch den Arbeitsfluid-Kreislauf erfolgt durch die Nutzung der Abwärme der Verdichterluft über den Wärmetauscher (33), dadurch erfährt das Arbeitsfluid (36) eine Temperaturerhöhung und gelangt in den Expander (30), so dass die dort stattfindende Entspannung die mechanische Energie zur Stromerzeugung über den Generator (13) erzeugt. Ober den Kondensator (31) und die Pumpe (32) wird der Arbeitsfluid-Kreislauf wieder in Richtung Wärmetauscher (33) in Betrieb genommen. Bei ausreichender Temperaturdifferenz zwischen dem niedrig temperierten Arbeitsfluid (36) sowie der höher temperierten Verdichterluft (16) erfolgt die erste Verdampfung des Arbeitsfluids, wodurch der Anfahrvorgang des Arbeitsfluid-Kreislaufs in Gang gesetzt wird.

Die Verdichterluft (16) dient zur Versorgung der Brennkammer (11) mit Verbrennungsluft und wird nach der Abkühlung durch den Wärmetauscher (33) wieder durch den mit der Gasturbinenwärme (15) gespeisten Wärmetauscher (14) aufgeheizt und kann jetzt entweder direkt der Brennkammer (11) zur Verbrennung zugeführt werden oder es kann zusätzlich noch die Kopplung des Gesamtsystems mit einer Solarheizvorrichtung (21) erfolgen, diese kann in Abhängigkeit der äußeren Rahmenbedingungen (Tag, Nacht, sonnig, bewölkt) über Regelvorrichtungen (20, 22) gesteuert werden. Durch die in der Brennkammer (11) stattfindende Verbrennung eines Brennstoffes, beispielsweise Erdgas (EG), mit Hilfe der vorgewärmten und unter hohem Druck stehender Verdichterluft (16), wird ein Heißgas (15) mit gleicher oder höherer Temperatur zur Entspannung an den Turbinenteil (12) der Gasturbinenanlage geleitet, so dass mechanische Energie zur Stromerzeugung über den Generator (13) erzeugt wird. Zur weiteren Reduzierung der Kühlluftmengen, kann die Kühlluft (KL), alternativ zur direkten Entnahme (KL1) nach dem Verdichterteil (10),auch hinter dem Wärmetauscher (33) entnommen (KL2) werden.

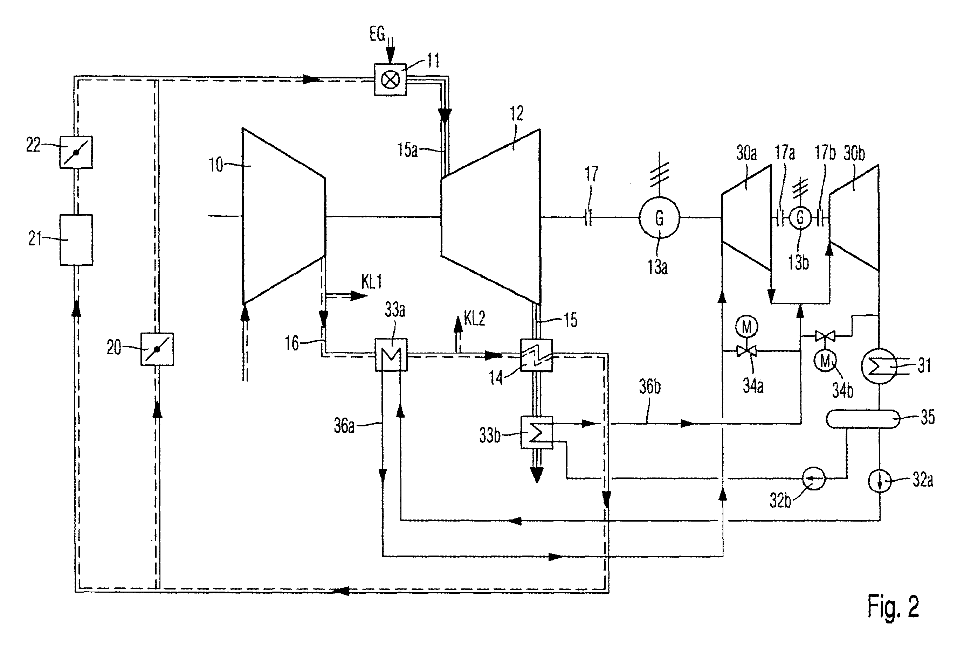

Ein System zur Erzeugung elektrischer Energie gemäß einem zweiten Ausführungsbeispiel der vorliegenden Erfindung wird unter Bezugnahme auf die beigefügte Figur 2 beschrieben.

Anders als beim ersten Ausführungsbeispiel, wird jetzt beim zweiten Ausführungsbeispiel der vorliegenden Erfindung nach Figur 2 eine weitere erfindungsgemäße Anordnung von einem mit der Gasturbinenanlage (10, 11, 12, 15, 16, 17, 20, 21, 22) gekoppelten Arbeitsfluid-Kreislauf (30a, 30b, 31, 32a, 32b, 33a, 33b, 34a, 34b, 35, 36a, 36b) für die Gewinnung von mechanischer Energie zur Erzeugung von elektrischer Energie durch einen Generator (13b) dargerstellt, allerdings sind in diesem Fall jetzt zwei Arbeitsfluid-Kreisläufe mit der Gasturbinenanlage gekoppelt.

Die Gasturbinenanlage und der Arbeitsfluid-Kreislauf sind in Ihren grundsätzlichen Bestandteilen gleich mit denen des ersten Ausführungsbeispieles, so dass im Folgenden überwiegend nur die Einbindung beider Arbeitsfluid-Kreisläufe in die Gasturbinenanlage beschrieben wird.

Die Erzeugung elektrischer Energie durch die Arbeitsfluid-Kreisläufe erfolgt jetzt einerseits durch die Nutzung der Abwärme der Verdichterluft (16) über den Wärmetauscher (33a) und andererseits durch die Nutzung der Gasturbinenabwärme (15) über den Wärmetauscher (33b), so dass zwischen einem HD-Arbeitsfluid-Kreislauf und einem ND-Arbeitsfluid-Kreislauf unterschieden werden kann.

Im HD-Arbeitsfluid-Kreislauf erfährt das Arbeitsfluid (36a) durch den HD-Wärmetauscher (33a) eine Temperaturerhöhung und gelangt in den HD-Expander (30a), so dass die dort stattfindende Entspannung die mechanische Energie zur Stromerzeugung über den Generator (13b) erzeugt. Das expandierte Arbeitsfluid wird dann dem nachfolgend beschriebenen ND-Arbeitsfluid-Kreislauf vor Eintritt in den ND-Expander zugeführt.

Im ND-Arbeitsfluid-Kreislauf erfährt das Arbeitsfluid (36b) durch den ND-Wärmetauscher (33b) eine Temperaturerhöhung und gelangt, gemeinsam mit dem expandierten Arbeitsfluid (36a) aus dem HD-Arbeitsfluid-Kreislauf in den ND-Expander (30b), so dass die dort stattfindende Entspannung die mechanische Energie zur Stromerzeugung über den Generator (13b) erzeugt.

Über den Kondensator (31) gelangen die Arbeitsfluide (36a, 36b) in den Arbeitsfluid-Tank (35) und von dort aus werden die zwei Arbeitsfluid-Keisläufe über eine HD-Pumpe (32a) und eine ND-Pumpe (32b) wieder in Richtung der jeweiligen Wärmetauscher (33a, 33b) geführt. Die HD- bzw. ND-Arbeitsfluide können bei ausreichender Temperaturdifferenz zwischen den niedrig temperierten Arbeitsfluiden (36a, 36b) und der höher temperierten Verdichterluft (16) sowie der Gasturbinenabwärme (15) in Betrieb genommen werden.

Die Verdichterluft (16) dient zur Versorgung der Brennkammer (11) mit Verbrennungsluft und wird nach der Abkühlung durch den HD-Wärmetauscher (33a) wieder durch den mit der Gasturbinenabwärme (15) gespeisten Wärmetauscher (14) aufgeheizt, dabei hat die abgekühlte Abgasmenge (15) der Gasturbinenanlage noch immer eine genügende Temperatur um über den ND-Wärmetauscher (33b) den zuvor beschriebenen ND-Arbeitsfluid-Kreislauf in Eingriff zu halten.

Die wieder aufgeheizte Verdichterluft (16) kann jetzt entweder direkt der Brennkammer (11) zur Verbrennung zugeführt werden oder es kann zusätzlich noch die Kopplung des Gesamtsystem mit einer Solarheizvorrichtung (21) erfolgen, diese kann in Abhängigkeit der äußeren Rahmenbedingungen (Tag, Nacht, sonnig, bewölkt) über Regelvorrichtungen (20, 22) gesteuert werden. Durch die in der Brennkammer (11) stattfindende Verbrennung eines Brennstoffes mit Hilfe der vorgewärmten und unter hohem Druck stehender Verdichterluft, wird ein Heißgas mit gleicher Temperatur zwecks Entspannung der Turbine (12) der Gasturbinenanlage zugeleitet, so dass mechanische Energie zur Stromerzeugung über die Generatoren (13a, 13b) erzeugt wird.

Die Nutzung der durch das in den beiden beschriebenen Ausführungsbeispielen beschriebene System beschränkt sich natürlich nicht nur auf die Nutzung der erzeugten mechanischen Energie für die Generatoren, vielmehr ist es auch möglich Arbeit leistende Maschinen mit einzubeziehen. Bei zweiwelligen Gasturbinenanlagen könnte zum Beispiel die mechanische Antriebsleistung für den Verdichterteil der Gasturbinenanlage teilweise oder ganz durch von der zusätzlich erzeugte mechanische Energie der Expander verwendet werden.

In den Unteransprüchen sind Varianten zur Einbindung von Verdichtern in einen Gesamtprozess beschrieben, allerdings sind diese nicht durch weitere Ausführungsbeispiele explizit beschrieben sowie dargestellt, doch lassen sich diese ohne Weiteres durch die bestehenden Ausführungsbeispiele herleiten.

### Bezugszeichenliste

- 10: Verdichter der Gasturbine
- 11: Brenner der Gasturbine
- 12: Turbine der Gasturbine
- 13: Generator
- 13a: Generator für Gasturbine
- 13b: Generator für Expander
- 14: Wärmetauscher (für Verdichterluft)
- 15: Gasturbinenabwärme (Heißgas nach Gasturbine)
- 15a: Gasturbinenabwärme (Heißgas vor Gasturbine)
- 16: Verdichterluft
- 17: Kupplung (Gasturbinenanlage an Generator)
- 17a: Kupplung (HD-Arbeitsfluid-Kreislauf an Generator)
- 17b: Kupplung (ND-Arbeitsfluid-Kreislauf an Generator)

- 20: Regelvorrichtung
- 21: Solarheizvorrichtung
- 22: Regelvorrichtung

- 30: Expander
- 30a: HD-Expander
- 30b: ND-Expander
- 31: Kondensator
- 32: Pumpe (für Arbeitsfluid-Kreislauf)
- 32a: Pumpe (für HD-Arbeitsfluid-Kreislauf)
- 32b: Pumpe (für ND-Arbeitsfluid-Kreislauf)
- 33: Wärmetauscher (für Arbeitsfluid-Kreislauf)
- 33a: Wärmetauscher (für HD-Arbeitsfluid-Kreislauf)
- 33b: Wärmetauscher (für ND-Arbeitsfluid-Kreislauf)
- 34: Bypassvorrichtung für Expander
- 34a: Bypassvorrichtung für HD-Expander
- 34b: Bypassvorrichtung für ND-Expander
- 35: Arbeitsfluid-Tank

- 36: Arbeitsfluid
- 36a: Arbeitsfluid (für HD-Kreislauf)
- 36b: Arbeitsfluid (für ND-Kreislauf)

- 113: Verdichter
- 113a: Verdichter für Gasturbine
- 113b: Verdichter für Expander

- EG: Erdgas (Brennstoff)
- KL1: Kühlluftentnahme nach dem Verdichter (10)
- KL2: Kühlluftentnahme nach dem Wärmetauscher (33, 33a)

## Patentansprüche

1. System zur Erzeugung mechanischer und/oder elektrischer Energie, bestehend aus einer mit einer Gasturbinenanlage gekoppelten weiteren Aggregatskette sowie mindestens einem mechanische Energie verbrauchenden Verdichter (113, 113a, 113b) und/oder mindestens einem elektrische Energie erzeugenden Generator (13, 13a, 13b),
wobei die Gasturbinenanlage aus einem Verdichterteil (10) zum Verdichten von Luft, einer Brennkammer (11) zur Verbrennung eines Brennstoffs (EG) zusammen mit der verdichteten Luft (16) des Verdichterteils (10) zu energiereichem Heißgas (15a), einem Turbinenteil (12) zum Expandieren des Heißgases (15a) sowie zur anschließenden Gewinnung mechanischer Energie für den Verdichter (113, 113a, 113b) und/oder Generator (13, 13a, 13b) besteht,
wobei die weitere Aggregatskette ein geschlossener Kreislauf mit einem Arbeitsfluid (36) ist und aus mindestens einem Wärmetauscher (33) zur Erhöhung der Wärmeenergie des Arbeitsfluids (36), mindestens einem Expander (30) zum Expandieren des Arbeitsfluids (36) sowie zur anschließenden Gewinnung mechanischer Energie für den Verdichter (113, 113a, 133b) und/oder Generator (13, 13a, 13b), mindestens einem Kondensator (31) zum Kondensieren des entspannten Arbeitsmittels (36) und mindestens einer Pumpe (32) zum Fördern des Arbeitsfluids (36) besteht,
**dadurch gekennzeichnet, dass**
die Koppelung der Gasturbinenanlage mit der weiteren Aggregatskette mittels des über die Verdichterluft (16) des Verdichters (10) mit Wärme gespeisten Wärmetauschers (33) erfolgt und den geschlossenen Kreislauf durch das Arbeitsfluid (36) in Gang setzt.

2. System zur Erzeugung mechanischer und/oder elektrischer Energie nach Anspruch 1, **dadurch gekennzeichnet,**
**dass** die Gasturbinenanlage nach dem Wärmetauscher (33) mindestens einen weiteren mit der Gasturbinenabwärme (15) gespeisten Wärmetauscher (14) zur Aufheizung der durch den Wärmetauscher (33) abgekühlten verdichteten Luft des Verdichterteils (10) enthält.

3. System zur Erzeugung mechanischer und/oder elektrischer Energie nach Anspruch 2, **dadurch gekennzeichnet,**
**dass** die Gasturbinenanlage einen Brennkammerteil (11), zur Erzeugung eines temperaturerhöhten Heißgases (15a) durch Verbrennung eines Brennstoffes (EG) mit Hilfe der durch den Wärmetauscher (14) wieder aufgeheizten Luft des Verdichterteils (10), einen Turbinenteil (12), zur Erzeugung mechanischer Energie durch Entspannung des Heißgases (15a).

4. System zur Erzeugung mechanischer und/oder elektrischer Energie nach Anspruch 3, **dadurch gekennzeichnet,**
**dass** die Gasturbinenanlage vor dem Brennkammerteil (11) eine Solarheizvorrichtung (21), zur Temperaturerhöhung der Verdichterluft enthält.

5. System zur Erzeugung mechanischer und/oder elektrischer Energie nach Anspruch 4, **dadurch gekennzeichnet,**
**dass** die Gasturbinenanlage Regelvorrichtungen (20, 22), zur alleinigen oder teilweisen Ein- oder Auskopplung der Solarheizvorrichtung (21), enthält.

6. System zur Erzeugung mechanischer und/oder elektrischer Energie nach einem der vorherigen Ansprüche, **dadurch gekennzeichnet,**
**dass** die weitere Aggregatskette aus mindestens zwei Wärmetauschern (33a, 33b), zwei Expandern (30a, 30b), mindestens einem mechanische Energie verbrauchenden Verdichter (113a, 113b) und/oder mindestens einem elektrische Energie erzeugenden Generator (13a, 13b), mindestens einem Kondensator (31), mindestens einem Arbeitsfluid-Tank (35) und mindestens aus zwei Pumpen (32a, 32b) besteht.

7. System zur Erzeugung mechanischer und/oder elektrischer Energie nach einem der vorherigen Ansprüche, **dadurch gekennzeichnet,**
**dass** dem Wärmetauscher (14), der die Gasturbinenluft bereits abgekühlt hat, ein weiterer Wärmetauscher (33b), zur weiteren Abkühlung der Gasturbinenabwärme (15) und zur gleichzeitigen Erwärmung des Arbeitsfluids (36b) zur in Gangsetzung des geschlossenen Kreislaufs der weiteren Aggregatskette, nachgeschaltet ist.

8. System zur Erzeugung mechanischer und/oder elektrischer Energie nach einem der vorherigen Ansprüche, **dadurch gekennzeichnet,**
**dass** die weitere Aggregatskette aus einem HD-Kreislauf besteht, wobei der HD-Wärmetauscher (33a) die Erhöhung der Wärmeenergie des Arbeitsfluids (36a) bewirkt und wobei dann der HD-Expander (30a) über die Expansion des Arbeitsfluids (36a) mechanische Energie zum Antrieb des Verdichters (113b) und/oder zur Erzeugung elektrischer Energie für den Generator (13 b) bereitstellt.

9. System zur Erzeugung mechanischer und/oder elektrischer Energie nach einem der vorherigen Ansprüche, **dadurch gekennzeichnet,**
**dass** die weitere Aggregatskette aus einem ND-Kreislauf besteht, wobei der ND-Wärmetauscher (33b) die Erhöhung der Wärmeenergie des Arbeitsfluids (36b) bewirkt und wobei dann der ND-Expander (30b) über die Expansion des Arbeitsfluids (36b) mechanische Energie zum Antrieb des Verdichters (113b) und/oder zur Erzeugung elektrischer Energie durch den Generator (13 b) bereitstellt.

10. System zur Erzeugung mechanischer und/oder elektrischer Energie nach einem der vorherigen Ansprüche, **dadurch gekennzeichnet,**
**dass** der ND-Expander (30b) zusätzlich zum Arbeitsfluid (36b) aus dem ND-Kreislauf noch mit dem im HD-Expander (30a) entspannten Arbeitsfluid (36a) des HD-Kreislaufs gespeist wird.

11. System zur Erzeugung mechanischer und/oder elektrischer Energie nach einem der vorherigen Ansprüche, **dadurch gekennzeichnet,**
**dass** die durch den Turbinenteil (12) erzeugte mechanische Energie zur Erzeugung elektrischer Energie für mindestens einen Generator (13, 13a) dient.

12. System zur Erzeugung mechanischer und/oder elektrischer Energie nach einem der vorherigen Ansprüche, **dadurch gekennzeichnet,**
**dass** die durch die Expander (30, 30a, 30b) erzeugte mechanische Energie zur Erzeugung elektrischer Energie für mindestens einen Generator (13, 13a, 13b) dient.

13. System zur Erzeugung mechanischer und/oder elektrischer Energie nach einem der vorherigen Ansprüche, **dadurch gekennzeichnet,**
**dass** der Generator (13a) einerseits über eine Kupplung (17) mit dem Kompressorteil (10) und des Turbinenteils (12) der Gasturbinenanlage verbunden ist und andererseits die Expander (30a, 30b) über die Kupplungen (17a, 17b) miteinander verbunden sind.

14. System zur Erzeugung mechanischer und/oder elektrischer Energie nach einem der vorherigen Ansprüche, **dadurch gekennzeichnet,**
**dass** sowohl der ND-Expander (30b) als auch der HD-Expander (30a) die mechanischen Energie zur Erzeugung elektrischer Energie für einen über die Kupplungen (17a, 17b) verbundenen Generator (13b) liefern.

15. System zur Erzeugung mechanischer und/oder elektrischer Energie nach einem der vorherigen Ansprüche, **dadurch gekennzeichnet,**
**dass** zur weiteren Reduzierung der Kühlluftmengen die Entnahmestelle (KL2) hinter den Wärmetauschern (33, 33a) gelegt wird.

16. System zur Erzeugung mechanischer und/oder elektrischer Energie nach einem der vorherigen Ansprüche, **dadurch gekennzeichnet,**
**dass** bei einer Störung des Expanders (30) dieser durch die Kupplung (17a) vom Generator (13) getrennt werden kann und durch die Bypassvorrichtung (34) die Gasturbinenanlage weiter betrieben werden kann.

17. System zur Erzeugung mechanischer und/oder elektrischer Energie nach einem der vorherigen Ansprüche, **dadurch gekennzeichnet,**
**dass** bei einer Störung des HD-Expanders (30a) dieser durch die Kupplung (17a) vom Generator (13b) getrennt werden kann und das System durch die Bypassvorrichtung (34a) der ND-Expander (30b) weiter betrieben werden kann.

18. System zur Erzeugung mechanischer und/oder elektrischer Energie nach einem der vorherigen Ansprüche, **dadurch gekennzeichnet,**
**dass** bei einer Störung des ND-Expanders (30b) dieser durch die Kupplung (17b) vom Generator (13b) getrennt werden kann und das System durch die Bypassvorrichtung (34b) über den HD-Expander (30a) weiter betrieben werden kann.

19. System zur Erzeugung mechanischer und/oder elektrischer Energie nach einem der vorherigen Ansprüche, **dadurch gekennzeichnet,**
**dass** die durch den Turbinenteil (12) erzeugte mechanische Energie zum Antrieb mindestens eines Verdichters (113,113a) dient.

20. System zur Erzeugung mechanischer und/oder elektrischer Energie nach einem der vorherigen Ansprüche, **dadurch gekennzeichnet,**
**dass** die durch die Expander (30, 30a, 30b) erzeugte mechanische Energie zum Antrieb mindestens eines Verdichters (113, 113a, 113b) dient.

21. System zur Erzeugung mechanischer und/oder elektrischerEnergie nach einem der vorherigen Ansprüche, **dadurch gekennzeichnet,**
**dass** der mindestens eine Verdichter (113a) einerseits über eine Kupplung (17) mit dem Kompressorteil (10) und des Turbinenteils (12) der Gasturbinenanlage verbunden ist und andererseits die Expander (30a, 30b) über die Kupplungen (17a, 17b) miteinander verbunden sind.

22. System zur Erzeugung mechanischer und/oder elektrischer Energie nach einem der vorherigen Ansprüche, **dadurch gekennzeichnet,**
**dass** sowohl der ND-Expander (30b) als auch der HD-Expander (30a) die mechanische Energie für mindestens einen über die Kupplungen (17a, 17b) verbundenen Verdichter (113b) liefern.

23. System zur Erzeugung mechanischer und/oder elektrischer Energie nach einem der vorherigen Ansprüche, **dadurch gekennzeichnet,**
**dass** bei einer Störung des Expanders (30) dieser durch die Kupplung (17a) von dem mindestens einen Verdichter (113) getrennt werden kann und durch die Bypassvorrichtung (34) die Gasturbinenanlage weiter betrieben werden kann.

24. System zur Erzeugung mechanischer und/oder elektrischer Energie nach einem der vorherigen Ansprüche, **dadurch gekennzeichnet,**
**dass** bei einer Störung des HD-Expanders (30a) dieser durch die Kupplung (17a) von dem mindestens einem Verdichter (113b) getrennt werden kann und das System durch die Bypassvorrichtung (34a) der ND-Expander (30b) weiter betrieben werden kann.

25. System zur Erzeugung mechanischer und/oder elektrischer Energie nach einem der vorherigen Ansprüche, **dadurch gekennzeichnet,**
**dass** bei einer Störung des ND-Expanders (30b) dieser durch die Kupplung (17b) von dem mindestens einem Verdichter (113b) getrennt werden kann und das System durch die Bypassvorrichtung (34b) über den HD-Expander (30a) weiter betrieben werden kann.
